# EUROPEAN PATENT APPLICATION

(11) **EP 4 831 604 A1**
(43) Date of publication of application: **28.10.2026**
(21) Application number: 25171769.0
(22) Date of filing: 22.04.2025
(51) Int. Cl.: G01M 11/08, G01L 1/24, G01B 11/16, G01B 11/255, G01M 5/00, H01B 7/32

(54) **SUBMARINE POWER CABLE SYSTEM WITH CURVATURE MONITORING CAPABILITY**

(71) Applicant: NKT HV Cables AB, 371 65 Lyckeby (SE)
(72) Inventor: RYDÉN, Vilhelm, 371 52 Karlskrona (SE); TYRBERG, Andreas, 371 62 Lyckeby (SE)
(74) Representative: Kransell & Wennborg KB

(57) **Abstract**

A submarine power cable system (1.1) comprising: a submarine power cable (3), a curvature sensor comprising: an elastic elongated member, and a plurality of Fibre Bragg Grating, FBG, fibres, each FBG fibre extending axially along the elastic elongated member at a radial distance from the centre of the elastic elongated member; and a flexible tube (5), wherein the curvature sensor is arranged in the flexible tube (5), and wherein the flexible tube (5) is arranged externally to the submarine power cable (3) such that dynamic bending motion of the submarine power cable (3) can be transferred to the flexible tube (5), the flexible tube (5) having a bend stiffness and elasticity enabling the flexible tube (5) to follow the dynamic bending motion of the submarine power cable (3) and transfer the bending motion to the elastic elongated member in the flexible tube (5).

## Description

### TECHNICAL FIELD

The present disclosure generally relates to submarine power cables.

### BACKGROUND

Submarine power cables that undergo repeated, dynamic, bending variations are subjected to fatigue stress that may cause fatigue damage. Fatigue stress can occur during offshore installation or repairs when the submarine power cable is suspended from a marine vessel to the seabed, during operation of dynamic submarine power cables suspended from floating platforms, and during operation of static submarine power cables over free-spans, for instance from the seabed to the J-tube at a stationary platform such as a wind turbine platform. The bending variations of the cable results from wave induced movements of the floating platform or vessel or by hydrodynamic loads induced by waves and currents on the suspended cable.

In view of the above, it may be desirable to measure the fatigue damage of submarine power cables. EP3992601 A1 discloses a multi-phase submarine power cable comprising a plurality of power cores arranged in a stranded configuration, and a curvature sensor comprising: an elastic elongated member, and a plurality of Fibre Bragg Grating (FBG) fibres. Each FBG fibre extends axially along the elongated member at a radial distance from the centre of the elongated member. The elongated member extends between the stranded power cores along a central axis of the multi-phase submarine power cable.

### SUMMARY

In some cases, for example when single core power cables are used, if the area between the cores is filled with a compound during or after cable installation, or if a multi-core power cable is so small that a curvature sensor does not fit between the power cores, it may not be possible to implement a submarine power cable as disclosed in EP3992601 A1.

In view of the above, a general object of the present disclosure is to provide a submarine power cable system that solves or at least mitigates the problems of the prior art.

There is hence according to a first aspect of the present disclosure provided a submarine power cable system comprising: a submarine power cable, a curvature sensor comprising: an elastic elongated member, and a plurality of Fibre Bragg Grating, FBG, fibres, each FBG fibre extending axially along the elastic elongated member at a radial distance from the centre of the elastic elongated member; and a flexible tube, wherein the curvature sensor is arranged in the flexible tube, and wherein the flexible tube is arranged externally to the submarine power cable such that dynamic bending motion of the submarine power cable can be transferred to the flexible tube, the flexible tube having a bend stiffness and elasticity enabling the flexible tube to follow the dynamic bending motion of the submarine power cable and transfer the bending motion to the elastic elongated member in the flexible tube.

The curvature variations of the submarine power cable can thus be measured even if the submarine power cable is e.g., a single core power cable, a small multi-core submarine power cable with no space to accommodate an internal curvature sensor, or a multi-core power cable with a compound or resin-filled interior.

The flexible tube is attached directly or indirectly to the submarine power cable such that dynamic bending motion of the submarine power cable can be transferred to the flexible tube.

The FBG fibres may be arranged offset from the centre of the elongated member. The FBG fibres may be arranged at a radial distance r from the centre of the elongated member. The local curvature C of the elongated member may be determined by C=ε/r, where ε is the strain in the FBG fibre.

The strain that the FBG fibres are subjected to can be calculated based on electromagnetic waves reflected in the gratings of the FBG fibres.

The radial distance r of the FBG fibres from the centre of the elastic elongated member ensures that the curvature of the elastic elongated member can be determined. The curvature of the submarine power cable can thus be determined. The curvature resolution becomes very high, for example less than 0.001 m⁻¹. Moreover, the sampling frequency of the curvature variations can be as high as 10-20 Hz, or even up to 1000 Hz.

The FBG fibres may be connected to a monitoring system. The monitoring system may be configured to transmit electromagnetic waves into the FBG fibres. The monitoring system may be configured to detect reflected electromagnetic waves from the FBG fibres.

The monitoring system may be configured to calculate a curvature of the elongated member based on reflected electromagnetic waves from the FBG fibres.

The monitoring system may comprise an electromagnetic wave transmitting and detecting device, and a processing device.

The electromagnetic wave transmitting and detecting device may be configured to emit electromagnetic waves into the FBG fibres and to detect reflected electromagnetic waves from the FBG fibres.

The processing device may be configured to determine the curvature of the multi-phase submarine power cable based on the detected electromagnetic waves.

The electromagnetic wave transmitting and detecting device and the processing device may be the same device or they may be different devices.

According to one embodiment the flexible tube has an inner chamber accommodating the elastic elongated member, wherein the inner chamber has an inner diameter that is at most 100% larger, such as at most 80% larger, such as at most 60% larger, such as at most 40% larger, than an outer diameter of the elastic elongated member.

The inner diameter may according to one example be at least 1% larger, such as at least 2%, 3%, 4%, 5%, 10%, 20%, 30%, 40% or 50% larger than an outer diameter of the elastic elongated member.

For the most accurate measurements the inner diameter of the inner chamber should be very close to the outer diameter of the elastic elongated member. However, if the fit is too tight, it is difficult to install the elastic elongated member in the flexible tube. The above upper and lower inner/outer diameter thresholds provide a good trade-off between measurement accuracy and installation practicality.

The flexible tube may be a smooth tube or a corrugated tube.

In case the chamber is too tight for the elastic elongated member, it becomes difficult to insert the curvature sensor in the flexible tube.

According to one embodiment the flexible tube is attached directly to an outer surface of the submarine power cable.

According to one embodiment the submarine power cable has a first longitudinal axis and the flexible tube has a second longitudinal axis, wherein the first longitudinal axis and the second longitudinal axis are parallel.

One embodiment comprises an overbending protection device arranged around and in direct contact with the submarine power cable, wherein the flexible tube is attached to the overbending protection device.

The flexible tube may for example be attached to an outer surface of the overbending protection device.

According to one embodiment the overbending protection device is a cable protection system.

According to one embodiment the flexible tube is attached by means of tape, cable ties, or by a heat shrink tube.

According to one embodiment the flexible tube is attached by means of the tape or by the heat shrink tube along a measurement range of the flexible tube, the measurement range being an entire axial section of the flexible tube along which measurements are to be made with the curvature sensor, wherein the tape or shrink tube covers at least 50% of the measurement range, such as at least 70% of the measurement range, at least 90%, or 100% of the measurement range.

The tape may be wound around the flexible tube with overlaps to cover portions of or the entire measurement range.

According to one example, the flexible tube may be attached by means of the tape or by the heat shrink tube, and also with cable ties along the measurement range. For example, one or more sections of the measurement range may be attached by tape or heat shrink tube, and another section or other sections may be attached by means of cable ties.

Continuous attachment by taping at least 50% of the measurement range, or using a heat shrink tube along at least 50% of measurement range, may make the measurement more accurate as it reduces or eliminates any influence that discretely positioned cable ties or straps may have on the measurements.

According to one embodiment the curvature sensor is arranged along the measurement range of the flexible tube, wherein all FBGs, of all the FBG fibres, used for monitoring a curvature of the submarine power cable, are arranged in the measurement range.

According to one embodiment each FBG fibre runs in a straight line along the elastic elongated member along the entire measurement range.

The number of discrete FBGs may be in a range of 10-30 per FBG fibre. The discrete FBGs may be uniformly distributed along the measurement range.

According to one embodiment the flexible tube is free of any joints.

In one example, the flexible tube is free of any joints in the measurement range.

According to one embodiment the submarine power cable is a dynamic submarine power cable.

Dynamic submarine power cables are designed to be subjected to wave motion. Dynamic multi-phase submarine power cables extend from a floating offshore platform to the seabed when installed.

According to one embodiment the submarine power cable is a static submarine power cable.

Static submarine power cables extend on the seabed but may extend from the seabed via a tube up to a stationary offshore platform, such as an offshore wind turbine platform. Static submarine power cables may also be subjected to loads due to wave motion or currents in the region between the seabed and the tube.

According to one example the plurality of FBG fibres is at least three FBG fibres. The curvature sensor may thus comprise at least three FBG fibres.

By using at least three FBG fibres, all radial bending directions as well as axial strain may be detected. The axial strain may be induced by axial tension of the elongated member or thermal expansion due to a change in temperature.

According to one example the elongated member is made of a composite material or a thermoplastic material.

According to one example the composite material is fibreglass.

According to one example the elongated member has a bending stiffness of at least 0.3 Nm², such as at least 1 Nm², such as at least 1.5 Nm², such as at least 2 Nm², such as at least 2.5 Nm², such as at least 3 Nm².

According to one example the elongated member has a circular cross-section. This ensures that the elongated member will behave the same irrespective of which direction it is bent.

There is according to a second aspect of the present disclosure provided a method of preparing a submarine power cable system of the first aspect for operation, the method comprising: a) arranging the flexible tube around the submarine power cable such that dynamic bending motion of the submarine power cable can be transferred to the flexible tube, wherein the curvature sensor is placed in the flexible tube prior to step a) or after step a).

According to one embodiment step a) is a retrofitting of the flexible tube around the submarine power cable.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a sectional view of an example of a submarine power cable system;
Fig. 2 schematically shows a sectional view of another example of a submarine power cable system;
Fig. 3 schematically shows a sectional view of yet another example of a submarine power cable system;
Fig. 4 schematically shows a cross-sectional view of an example of a curvature sensor; and
Fig. 5 is a flowchart of a method of preparing a power cable for operation.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

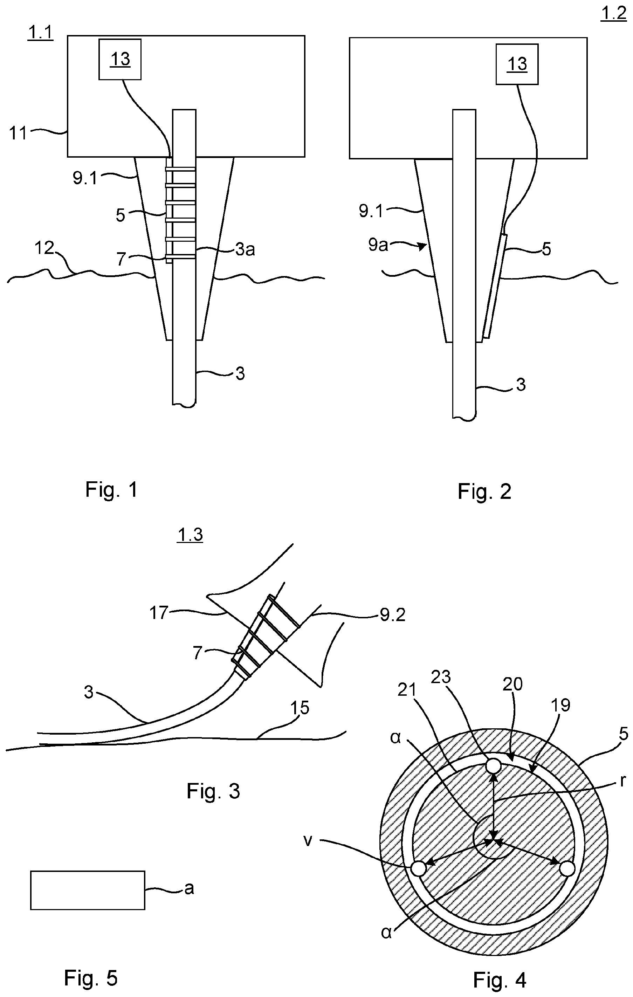

Fig. 1 schematically shows an example of a submarine power cable system 1.1. The submarine power cable system 1.1 comprises a submarine power cable 3, a flexible tube 5, and a curvature sensor (not shown in Fig. 1) arranged in the flexible tube 5.

The flexible tube 5 is arranged externally to the submarine power cable 3.

In the example in Fig. 1, the flexible tube 5 is attached directly to the submarine power cable 3. The flexible tube 5 may be attached directly to and be in direct contact with an outer surface 3a of the submarine power cable 3. Alternatively, an intermediate layer, for example a spacer layer, may be provided between the flexible tube 5 and the outer surface 3a of the submarine power cable 3. The flexible tube 5 is in this case in direct contact with the intermediate layer, and the intermediate layer is in direct contact with the outer surface 3a of the submarine power cable 3.

The flexible tube 5 has an outer surface that may be in physical contact with the outer surface 3a of the submarine power cable 3, or the intermediate layer, along the entire, or at least a majority, of the length along which the curvature sensor extends inside the flexible tube 5. The attachment means 7 is arranged to press the flexible tube 5 against the submarine power cable 3.

The flexible tube 5 may be attached to the submarine power cable 3 by means of attachment means 7, such as straps, tape, polymeric yarn, cable ties, a heat shrink tube, a sock, or the like. The flexible tube 5 is attached to the submarine power cable 3 along a portion so long that the curvature sensor can follow the bending movement of the submarine power cable 3 to thereby measure the curvature of a predefined monitoring length of interest of the submarine power cable 3.

The submarine power cable 3 has a first longitudinal axis. The flexible tube 5 has a second longitudinal axis. The flexible tube 5 is arranged parallel with the submarine power cable 1. Thus, the flexible tube 5 is arranged such that the second longitudinal axis is parallel with the first longitudinal axis. Hereto, when the submarine power cable 3 is in a resting state, i.e., a state in which the portion of the submarine power cable 3 along which the flexible tube 5 is located is straight, i.e., unbent, the first longitudinal axis and the second longitudinal axis are parallel. When the submarine power cable 3 is bent as a result of for example wave motion, the flexible tube 5 is bent together with the submarine power cable 3. In particular, dynamic bending motion of the submarine power cable 3 can thereby be transferred to the flexible tube 5, which has a bend stiffness and elasticity enabling the flexible tube 5 to follow the dynamic bending motion of the submarine power cable 3. The curvature sensor is in turn configured to follow the bending or deformation of the flexible tube 5.

According to the example in Fig. 1, an overbending protection device 9.1 in the form of a bend stiffener is arranged around the submarine power cable 3 and around the flexible tube 5. The flexible tube 5 is thus arranged inside the overbending protection device 9.1, between the submarine power cable 3 and an inner surface of an axial channel extending through the overbending protection device 9.1.

The overbending protection device 9.1 is arranged along a section of the submarine power cable 3 in which it is expected that the dynamic forces acting on the submarine power cable 3 as a result of wave motion are most intense. This is typically in a region where the submarine power cable 3 exits a floating structure 11, such as a floating wind turbine platform, and enters the seawater 12.

In one variation of the example in Fig. 1, the overbending protection device 9.1 may be a bellmouth instead of a bend stiffener.

The curvature sensor is connected to a monitoring system 13. The monitoring system 13 may be located on the floating structure 11 as in the example in Fig. 1, or arranged remotely with respect to the floating structure 11.

The monitoring system 13 is configured to emit electromagnetic waves, e.g. infrared, visible or ultraviolet light into the curvature sensor and to detect electromagnetic waves reflected by the curvature sensor as will be described in more detail herein.

Fig. 2 shows another example of a submarine power cable system. The submarine power cable system 1.2 is similar to the submarine power cable system 1.1 of Fig. 1. However, in this example, the flexible tube 5 and thus the curvature sensor that it holds is attached to the overbending protection device 9. In the example, the overbending protection device 9.1 is a bend stiffener like in the example in Fig. 1.

The flexible tube 5 may be attached directly to and be in direct contact with an outer surface 9a of the overbending protection device 9.1. Alternatively, an intermediate layer, for example a spacer layer, may be provided between the flexible tube 5 and the outer surface 9a of the overbending protection device 9.1. The flexible tube 5 is in this case in direct contact with the intermediate layer, and the intermediate layer is in direct contact with the outer surface 9a of the overbending protection device 9.1.

The flexible tube 5 has an outer surface that may be in physical contact with the outer surface 9a of the overbending protection device 9.1, or the intermediate layer, along the entire, or at least a majority, of the length along which the curvature sensor extends in the flexible tube 5. The attachment means (not shown in Fig. 2) is arranged to press the flexible tube 5 against the overbending protection device 9.1.

The flexible tube 5 may be attached to the overbending protection device 9.1 by means of the attachment means, such as straps, tape, polymeric yarn, cable ties, a heat shrink tube, a sock, or the like. The flexible tube 5 is attached to the overbending protection device 9.1 along a portion so long that the curvature sensor can follow the bending movement of the overbending protection device 9.1 to thereby measure the curvature of a predefined monitoring length of interest of the overbending protection device 9.1, which is bent together with the submarine power cable 3.

In the examples shown in Figs 1-2, the submarine power cable 3 is typically a dynamic submarine power cable.

Fig. 3 shows yet another example of a submarine power cable system. The submarine power cable system 1.3 is similar to the previously described submarine power cable systems 1.1 and 1.2. In the example of Fig. 3, however, the submarine power cable 3 is shown exiting a tube 17 such as a J-tube or similar structure, close to its touchdown point with the seabed 15. This is an unprotected region of the submarine power cable 3 where the submarine power cable 3 is subjected to hydrodynamic loads induced by waves and currents.

The submarine power cable system 1.3 comprises an overbending protection device 9.2 in the form of a cable protection system (CPS) arranged around the submarine power cable 3 to restricting bending of the submarine power cable 3 as it exits the tube 17. The overbending protection device 9.2 may be arranged in direct contact with the submarine power cable 3.

The flexible tube 5 is attached to the overbending protection device 9.2. The flexible tube 5 is attached to an outer surface of the overbending protection device 9.2.

The flexible tube 5 may be attached to the overbending protection device 9.2 by means of attachment means 7, such as straps, tape, polymeric yarn, cable ties, a heat shrink tube, a sock, or the like. The flexible tube 5 is attached to the overbending protection device 9.2 along a portion so long that the curvature sensor can follow the bending movement of the overbending protection device 9.2 and thus of the submarine power cable 3 to thereby measure the curvature of a predefined monitoring length of interest of the submarine power cable 3.

The submarine power cable 3 is in the example in Fig. 3 connected to an offshore structure that is stationarily mounted to the seabed 15. The submarine power cable 3 may in this example be a static submarine power cable.

Fig. 4 schematically shows a cross-section of an example of a curvature sensor 19 arranged in the flexible tube 5.

The curvature sensor 19 comprises an elastic elongated member 21 and a plurality of FBG fibres 23. Each FBG fibre 23 extends axially along the elongated member 21 at a radial distance r from the centre of the elongated member 21.

The flexible tube 5 has a monitoring range. The monitoring rang has a length designed to be able to measure the curvature along of the submarine power cable 3 along the predefined monitoring length of interest. The monitoring range may for example have a length of 2-60 m.

The curvature sensor 19 is arranged along the monitoring range of the flexible tube 5. In particular, the FBGs used for monitoring, or measuring, a curvature of the submarine power cable 3, are arranged in the measurement range.

The flexible tube 5 has an inner chamber 20 which accommodates the elastic elongated member 21. e According to any example herein the inner chamber 20 may have an inner diameter that is at most 150% larger, 140% larger, 130% larger, 120% larger, 110% larger, 100% larger, such as at most 90% larger, 80% larger, 70% larger, 60% larger, or 50% larger, than an outer diameter of the elastic elongated member 21.

The flexible tube 5 may according to any example herein be composed of a polymer material such as polypropylene, polyethylene, polyvinyl chloride (PVC), a metal or a composite material. The flexible tube 5 may typically have an elasticity modulus in a range of 50-1000 MPa or 100-1000 MPa at 20°C.

The flexible tube 5 may be a single, non-jointed, length. The flexible tube 5 may thus be joint-free.

The flexible tube 5 may have a total length in a range of 5-60 m, such as 10-50 m.

The elastic elongated member 21 may be a rod or a tube. The elastic elongated member 21 may have a circular cross-section.

The elastic elongated member 21 may have an elasticity such that it is able to bend as much as the allowed bending of submarine power cable 3 without plastic deformation.

The elastic elongated member 21 may comprise or consist of a composite material. The composite material may for example be fibreglass. The elastic elongated member 21 may according to other variations comprise a thermoplastic polymer. The thermoplastic polymer may for example be a high-density polyethylene (HDPE) or polypropylene.

The elastic elongated member 21 may have a bending stiffness, EI, of at least 0.3 Nm². The elastic elongated member 21 may for example have a bending stiffness of at least 1 Nm², such as at least 1.5 Nm², such as at least 2 Nm², such as at least 2.5 Nm², such as at least 3 Nm².

The FBGs used for monitoring a curvature of the submarine power cable of each FBG fibre 23 may be arranged in the monitoring range. The FBGs may run in a straight line, i.e., parallel with the longitudinal axis of the elastic elongated member 21, along the elastic elongated member 21 along the entire measurement range.

The elastic elongated member 21 may comprise channels distributed in the circumferential direction of the elastic elongated member 21. The channels may be evenly distributed in the circumferential direction of the elastic elongated member 21. The FBG fibre 23 may be arranged fixed in a respective channel. The channels may for example be arranged at angle α of 120° from each other. The channels may be arranged as recesses or grooves in the outer surface of the elastic elongated member 21 or inside the elastic elongated member 21.

The FBG fibres 23 comprises FBGs distributed along the length of the FBG fibres 23. The FBGs of different FBG fibres 23 may be axially aligned or essentially axially aligned. The curvature in different axial planes may thereby be determined in the same axial measurement points or regions.

In all examples, the FBG fibres 23 are connected to the monitoring system 13. The monitoring system 13 is configured to emit electromagnetic waves, e.g. infrared, visible or ultraviolet light into the FBG fibres 23. The monitoring system 13 is configured to detect electromagnetic waves reflected by the FBG fibres 23.

The monitoring system 13 may be configured to determine the curvature distribution at the discrete locations of the FBGs along the elastic elongated member 21 based on the reflected electromagnetic waves. The monitoring system 13 may be configured to determine the curvature radius of the elastic elongated member 21 at the discrete locations based on the elongation of the FBG fibres 23. The elongation that the FBGs in the FBG fibres 23 are subjected to can be calculated based on the reflected electromagnetic waves used in the measurement. The monitoring system 13 is configured to determine the curvature of the elastic elongated member 21 at the location of the FBGs and thus of the submarine power cable 3 along the monitored length, i.e., at the location of the curvature sensor 19, in different axial planes, based on the strain in the FBG fibres 23 and the radial distance r from the centre of the elastic elongated member 21 to the FBG fibres 23.

According to one example the monitoring system 13 may be configured to determine strain ranges based on the curvatures. The monitoring system 13 may use a mathematical model of the submarine power cable 3 to determine the strain or stress ranges in the internal cable components. The mathematical model may provide strain ranges in the most fatigue-sensitive component of the submarine power cable 3. This component may for example be a metallic water barrier and/or the conductor.

The monitoring system 13 may be configured to determine the number of occurrences of each strain or stress range. This can be performed for example by using the rain flow counting method.

The monitoring system 13 may be configured to determine the number of cycles to failure of the most fatigue-sensitive component for each strain or stress range. The number of cycles to failure for the strain or stress ranges can for example be determined using an S-N fatigue curve for the most fatigue-sensitive component such as the metallic water barrier or the conductor.

The monitoring system 13 may be configured to determine a fatigue damage of the submarine power cable 3 based on the number of occurrences of each strain or stress range and the number of cycles to failure for each of the strain ranges. The Palmgren-Miner linear damage hypothesis can be used to determine the fatigue damage.

The monitoring system 13 may be configured to repeat the steps above as new curvature variations are detected by changes in the detected electromagnetic waves. The fatigue damage of the current iteration is added to the fatigue damage of the previous iteration. An accumulated fatigue damage is thus obtained. In this way, real-time monitoring of the fatigue damage of the submarine power cable 3 may be performed.

Fig. 5 is a flowchart of a method of preparing the submarine power cable system 1.1, 1.2, 1.3 for operation. In a step a) the flexible tube 5 is arranged around the submarine power cable 3 such that dynamic bending motion of the submarine power cable 3 can be transferred to the flexible tube 5. The curvature sensor 19 is placed in the flexible tube 5 prior to step a) or after step a).

Step a) may according to one example be a retrofitting of the flexible tube 5 around the submarine power cable 3.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Submarine power cable system (1.1; 1.2; 1.3) comprising:
- a submarine power cable (3),
- a curvature sensor (19) comprising:
an elastic elongated member (21), and
a plurality of Fibre Bragg Grating, FBG, fibres (23), each FBG fibre (23) extending axially along the elastic elongated member (21) at a radial distance (r) from the centre of the elastic elongated member (21); and
- a flexible tube (5),
wherein the curvature sensor (19) is arranged in the flexible tube (5), and wherein the flexible tube (5) is arranged externally to the submarine power cable (3) such that dynamic bending motion of the submarine power cable (3) can be transferred to the flexible tube (5), the flexible tube (5) having a bend stiffness and elasticity enabling the flexible tube (5) to follow the dynamic bending motion of the submarine power cable (3) and transfer the bending motion to the elastic elongated member (21) in the flexible tube (5).

2. Submarine power cable system (1.1; 1.2; 1.3) as claimed in claim 1, wherein the flexible tube (5) has an inner chamber accommodating the elastic elongated member (21), wherein the inner chamber has an inner diameter that is at most 100% larger, such as at most 80% larger, such as at most 60% larger, such as at most 40% larger, than an outer diameter of the elastic elongated member (21).

3. Submarine power cable system (1.1) as claimed in claim 1 or 2, wherein the flexible tube (5) is attached directly to an outer surface of the submarine power cable (3).

4. Submarine power cable system (1.1) as claimed in claim 3, wherein the submarine power cable (3) has a first longitudinal axis and the flexible tube (5) has a second longitudinal axis, wherein the first longitudinal axis and the second longitudinal axis are parallel.

5. Submarine power cable system (1.2; 1.3) as claimed in claim 1 or 2, comprising an overbending protection device (9.1; 9.2) arranged around and in direct contact with the submarine power cable (3), wherein the flexible tube (5) is attached to the overbending protection device (9.1; 9.2).

6. Submarine power cables system (1.2; 1.3) as claimed in claim 5, wherein the overbending protection device (9.2) is a cable protection system.

7. Submarine power cable system (1.1; 1.2; 1.3) as claimed in any of claims 3-5, wherein the flexible tube (5) is attached by means of tape, cable ties, or by a heat shrink tube.

8. Submarine power cable system (1.1; 1.2; 1.3) as claimed in claim 7, wherein the flexible tube (5) is attached by means of the tape or by the heat shrink tube along a measurement range of the flexible tube (5), the measurement range being an entire axial section of the flexible tube (5) along which measurements are to be made with the curvature sensor (19), wherein the tape or shrink tube covers at least 50% of the measurement range, such as at least 70% of the measurement range, at least 90%, or 100% of the measurement range.

9. Submarine power cable system (1.1; 1.2; 1.3) as claimed in claim 8, wherein the curvature sensor (19) is arranged along the measurement range of the flexible tube (5), wherein all FBGs, of all the FBG fibres (23), used for monitoring a curvature of the submarine power cable (3), are arranged in the measurement range.

10. Submarine power cable system (1.1; 1.2; 1.3) as claimed in claim 9, wherein each FBG fibre (23) runs in a straight line along the elastic elongated member (21) along the entire measurement range.

11. Submarine power cable system (1.1; 1.2; 1.3) as claimed in any of the preceding claims, wherein the flexible tube (5) is free of any joints.

12. Submarine power cable system (1.1; 1.2) as claimed in any of the preceding claims, wherein the submarine power cable (3) is a dynamic submarine power cable.

13. Submarine power cable system (1.3) as claimed in any of claims 1-11, wherein the submarine power cable (3) is a static submarine power cable.

14. Method of preparing a submarine power cable system (1.1; 1.2; 1.3) as claimed in any of the preceding claims for operation, the method comprising:
a) arranging the flexible tube (5) around the submarine power cable (3) such that dynamic bending motion of the submarine power cable (3) can be transferred to the flexible tube (5), wherein the curvature sensor (19) is placed in the flexible tube (5) prior to step a) or after step a).

15. Method as claimed in claim 14, wherein step a) is a retrofitting of the flexible tube (5) around the submarine power cable (3).
